(19) Europäisches Patentamt
European Patent Office
Office européen des brevets

(11) **EP 4 495 188 A1**

(12) **EUROPEAN PATENT APPLICATION**

(43) Date of publication:
**22.01.2025 Bulletin 2025/04**

(21) Application number: **23186394.5**

(22) Date of filing: **19.07.2023**

(51) International Patent Classification (IPC):
*C08L 95/00* $^{(2006.01)}$

(52) Cooperative Patent Classification (CPC):
(C-Sets available)
**C08L 95/00;** C08L 2555/32; C08L 2555/82   (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nederlandse Organisatie voor
toegepast-natuurwetenschappelijk Onderzoek
TNO
2595 DA 's-Gravenhage (NL)**

(72) Inventor: **TABAKOVIC, Amir
2595 DA 's-Gravenhage (NL)**

(74) Representative: **V.O.
P.O. Box 87930
2508 DH Den Haag (NL)**

(54) **BIOPOLYMER BITUMEN SUBSTITUTE**

(57)    The disclosure pertains to a biopolymer bitumen substitute. The biopolymer is non-plant based. Significant amounts of the biopolymer can be included in a blend with bitumen without substantially altering or modifying the (viscoelastic) properties of the blend.

FIG. 1

(52) Cooperative Patent Classification (CPC): (Cont.)

C-Sets
**C08L 95/00, C08L 67/04**

## Description

### Field

The invention pertains a substitute material for bitumen.

### Introduction

Bitumen is a material having numerous applications and generally obtained as the heaviest portion from the oil distillation process as the residue left over from petroleum distillation, as such referred to: bottom of the barrel. Due to the different origins and distillation processes of crude oils, the resulting bitumen may have a wide range of properties and characteristics.

The asphalt industry is facing a bitumen supply problem because of the cost of crude oil. With the expected reduction of fossil fuel production, an urgent need exists for alternative bitumen products. Furthermore, goals to achieve $CO_2$-emission neutral road transport infrastructure forces the asphalt industry to look for alternative material source to replace crude oil-based bitumen products. For the past decades, the focus was on using plant-based oils, such as soybean oil, sunflower oil, rapeseed oil, palm oil, etc. Similarly, there is a desire to substitute bitumen for other applications of bitumen, such as for roofing and water-impermeable membranes.

One proposal is to utilise plant-based materials as bitumen replacement. However, this approach is at odds with the demands of human and animal food supply. It is not desirable, and it is potential very dangerous, that asphalt binder supply competes with the human and animal food supply.

US20170096558A1 describes bitumen composition comprising a lignin compound or derivative thereof; the lignin compound is derived from wood.

It is desired to provide bitumen substitute compounds from other sources to have more flexibility and diversity of supply streams and to more fully benefit from material sources.

### Summary

The invention aims to provide a biopolymer substitute for bitumen, wherein the biopolymer is especially a non-plant based biopolymer.

The invention pertains in a first aspect to the use of biopolymer, namely a copolymer comprising 3-hydroxybutyrate monomer and 3-hydroxyvalerate (PHBV), as bitumen substitute or bitumen replacement.

Preferably, the copolymer comprises at least 90 wt.% of -hydroxybutyrate monomer and 3-hydroxyvalerate monomer in total, relative to the total weight of the copolymer. Preferably, the use is for replacing bitumen by 10 to 30 wt.% PHBV based on PHBV and bitumen in total. The use is for instance for use of PHBV in paving or roofing as bitumen substitute or bitumen replacement.

Also provided is a composition, or material, comprising bitumen and a copolymer comprising 3-hydroxybutyrate monomer and 3-hydroxyvalerate monomer (PHBV); preferably as a partial substituent for the bitumen; and the use of PHBV in the composition as a partial substituent for the bitumen. The composition comprises preferably at least 10 wt.% PHBV based on total weight of the bitumen and PHBV. The composition is for example an asphalt concrete composition wherein the composition further comprises mineral aggregate. The mineral aggregate preferably comprises one or more components selected from the group consisting of sand, gravel, crushed stone, slag, and recycle concrete. Also provided is roofing and paving, and membranes comprising the composition. Other uses of the composition are also possible.

The invention also pertains to a method of preparing a pre-determined amount of a bitumen composition, preferably an inventive composition as described, the method comprising: determining the amount of bitumen composition to be produced on the basis of 100 wt.% bitumen, and providing the bitumen fraction in an amount of 90 wt.% or less of said determined amount of bitumen composition, e.g. 80 wt.% or less, or 75 wt.% or less, and including at least 10 wt.% PHBV in said bitumen composition, e.g. at least 15 wt.%, or at least 20 wt.%, or at least 25 wt.%, and/or up to 50 wt.% PHBV. For example, the PHBV fraction is included by blending the mixture with bitumen at a temperature of 140°C - 160°C and preferably at high shear. Also provided is the use of PHBV in the prepared bitumen composition as bitumen substitute.

The disclosure hence pertains to a biopolymer bitumen substitute. The biopolymer is non-plant based. Significant amounts of the biopolymer can be included in a blend with bitumen without substantially altering or modifying the (viscoelastic) properties of the blend.

### Brief description of the drawings

Figure 1 shows the DSR master curve (graph) for the soft (70/100) bitumen compositions with 0, and 10 wt.% PHBV included.

Fig. 2 shows the DSR master curve (graph) for the hard (40/60) bitumen compositions with respectively 0, 10, 20 and 30 wt.% PHBV included.

Fig. 3 shows microscopic images of 70/100 bitumen samples with a) 0% PHBV and b) 10% PHBV.

Any embodiments illustrated in the figures are examples only and do not limit the invention.

**Detailed description**

The invention is based on the judicious insights of using poly-3-hydroxybutyrate-co-3-hydroxyvalerate (PHBV) as substitute for bitumen. Advantageously, PHBV can be obtained from waste streams from wastewater treatment processes and was found be suitable as bitumen replacement, in particular in as asphalt binder. The use as a bitumen substitute can be distinguished from a use as bitumen modifier.

PHBV as bitumen substitute assists in the utilisation of the water sludge originating from the water treatment process. Utilisation of the PHBV in road construction is a disrupting technology which has a potential to change a century-long method of road construction, namely the use of bitumen as binder for asphalt bitumen originating from crude oil. Use of PHBV as asphalt binder may provide for improving the environmental, social, and financial results of the road construction industry.

Use of PHBV as a bitumen substitute contributes to a circular economy. Because the PHBV originates from e.g. a waste water treatment process. In an example, PHBV is a product of an industrial waste water treatment process, e.g. from paper production, where the leachate, bacteria containing PHBV, is cultivated using a fermentation process. In such a process, leachate is removed (filtered) from the water and clean water is returned to the factory, illustrating a perfect industrial circular process. The fermentation process cultivates the bacteria but also yields gas (which can be utilized instead of natural gas). Once fermented, the bacteria sludge with PHBV is processed (i.e. the PHBV extracted), and the biomass residue of the processing (PHBV extraction) contains proteins and nutrients can be used as a soil fertiliser crop nutrient. A second option is to use recycled PHBV. In such an embodiment, initially PHBV is used to produce articles. At the end of life of the articles, they are melted and the resulting PHBV can used in bitumen production. The invention also pertains to these processes for manufacture of PHBV, which are examples of circular economy.

The use of PHBV disclosed herein also radically departs from existing uses of PHBV such as in speciality packaging, orthopaedic devices and in controlled release of drugs.

It was surprisingly found that blends of bitumen and PHBV, in the examples at 10, 20 and 30 wt.% PHBV, exhibit mechanical performance characteristics comparable with neat bitumen (complex shear modulus and phase angle), and further characteristic comparable with neat bitumen, e.g. as determined with GPC and FTIR.

Hence, the disclosure provides a biopolymer bitumen substitute, in particular a non-plant-based biopolymer for use as bitumen substitute.

There are significant differences between bitumen terminology in Europe and the United States. Whereas in Europe the terms "bitumen" or "asphaltic bitumen" are used, the same material is referred to as "asphalt", "asphalt cement" or "asphalt binder" in the United States. In order to avoid confusion, the European terminology will be adhered to in this application.

Bitumen comprises typically naphthene aromatic compounds, polar aromatic compounds, saturated hydrocarbons, and asphalthenes.

Naphthene aromatics compounds may comprise partially hydrogenated polycyclic aromatic compounds. The polar aromatic compounds may comprise high molecular weight phenols and carboxylic acids. The asphaltenes may comprise high molecular weight phenols and heterocyclic compounds.

The bitumen for example contains between 5 and 25% by weight of asphaltenes dispersed in 90% to 65% by weight of n-alkane (pentane or heptane)-soluble molecular components.

PHBV is used in this disclosure to broadly refer to a copolymer comprising 3-hydroxybutyrate monomer (HB) and 3-hydroxyvalerate monomer (HV); and optionally further monomers and modifiers. The copolymer comprises e.g. at least 80 wt.% or at least 90 wt.% of HB and HV monomer in total, relative to total mass of copolymer. PHBV is a type of polyhydroxyalkanoate (PHA).

The bitumen/PHBV mixture, for instance has a Mn (number average molecular weight) of at least 400, or at least 500, or at least 600, and/or up to 1000; and/or has a Mw (weight average molecular weight) of at least 1000, or at least 1200, or at least 1400, e.g. up to 2000; all in Dalton.

The polydispersity index (PDI) is used as a measure of the broadness of a molecular weight and is calculated using following formula:

$$PDI = \frac{M_w}{M_n}$$

The larger the polydispersity index, the broader the molecular weight. A monodisperse polymer where all the chain lengths are equal (such as a protein) has an Mw/Mn = 1. The best controlled synthetic polymers (narrow polymers used for calibrations) have Mw/Mn of 1.02 to 1.10. Step polymerization reactions typically yield values of Mw/Mn of around 2.0, whereas chain reactions yield Mw/Mn values between 1.5 and 20. The polydispersity index (PDI) for the inventive PHBV/bitumen blends, is typically above 2.0, e.g. above 2.1, or above 2.2, and/or e.g. up to 3.0 or up to 2.5. These values for PDI indicate that the blends have broad molecular dispersity (PDI >2,0). Experimental results show that all blends have very similar molecular dispersity with slight increased value of the blends containing 30%PHBV; supporting the use of PHBV as bitumen substitute.

Molecular weight is e.g. as determined with gel permeation chromatography (GPC).

The PHBV can be obtained, for instance, by extraction from organic waste sludge; without limiting the invention to any particular method of obtaining PHBV.

An example procedure for obtaining PHBV is described in EP2956493.

A background reference for such extraction is Elhami et al., Extraction of low molecular weight polyhydroxyalkanoates from mixed microbial cultures using bio-based solvents, Separation and Purification Technology, Volume 299, 2022, 121773, DOI: 10.1016/j.seppur.2022.121773. Another reference describing methods for obtaining PHBV is Werker et al, Consistent production of high quality PHA using activated sludge harvested from full scale municipal wastewater treatment - PHARIO. Water Sci Technol 28 December 2018; 78 (11): 2256-2269. doi: 10.2166/wst.2018.502.

The PHBV is a non-plant-based biopolymer. The PHBV is obtained from microbial source, in particular from bacteria.

An embodiment of the invention pertains to the use of PHBV as a substitute for bitumen.

An embodiment provides a method of reducing the bitumen content of bitumen composition, the method involving including PHBV in the bitumen composition. Also provided is a method of manufacturing a bitumen composition, the method involving a step of incorporating an amount of PHBV in the bitumen composition and reducing the bitumen fraction of the composition with the same amount on a weight basis. Preferably in the method PHBV is included in in at least 10 wt.% of the total amount of bitumen composition and preferably the bitumen fraction is reduced by at least 10 wt.%.

Also provided is a method of manufacturing a pre-determined amount of bitumen composition, the method involving determining the amount of bitumen composition to be produced on the basis of 100 wt.% bitumen, and providing the bitumen fraction in an amount of 90 wt.% or less of said determined amount of bitumen composition and including at least 10 wt.% of PHBV in said bitumen composition, e.g. up to 50 wt.% PHBV. In this way, PHBV can be used as a substitute or replacement of bitumen and for reducing the bitumen consumption.

The PHBV fraction is preferably included by blending the mixture with bitumen at a temperature of 140°C-160°C and preferably at high shear (> 200 RPM or above 300 RPM, where: RPM = revolution per minute).

Also provided is composition comprising PHBV and bitumen. Preferably, the PHBV is a partial substituent for at least 10 wt.%, e.g. up to 50 wt.%, of the bitumen. The composition may also comprise additives and modifiers.

The composition is for instance an asphalt concrete composition. The composition, in particular asphalt concrete composition, preferably comprises mineral aggregate. The mineral aggregate preferably comprises one or more components selected from the group consisting of sand, gravel, crushed stone, slag, and recycle concrete. The composition comprises e.g. at least 10 wt.% or at least 50 wt.% of said mineral aggregate and e.g. at least 1.0 wt.% or at least 10 wt.% of the bitumen composition comprising PHBV and bitumen, based on total weight of the total composition, in particular on the basis of the asphalt aggregate composition. Hence, provided is a method of making mineral aggregate comprising mixing the composition comprising PHBV and bitumen with mineral aggregate.

The disclosure also provides a membrane, roofing and paving, each comprising PHBV, in particular a comprising a bitumen composition comprising PHBV and bitumen, preferably as described hereinbefore. The paving preferably also comprises the mineral aggregate as described. The membrane, roofing, and paving for example each independently comprise at least 1.0 wt.% PHBV based on total weight of the respective article.

The bitumen composition comprising bitumen and BHPV is for example, without limitation, used in membranes, e.g. a leak proofing membrane, a water proofing membrane and a sound proofing membrane. The composition is also suitable for paving and roofing. The composition can be more broadly used for the known applications of bitumen.

**Example**

The invention will now be further illustrated by the following non-limiting example. The example does not limit the invention and does not limit the claims.

<u>Example 1</u>

*<u>Methods</u>*

PHBV was obtained by solvent extraction from organic waste leachate, i.e. from liquid generated by water percolating through solid waste.

The PHBV was blended with two types of bitumen: soft (bitumen penetration grade 70/100 or 70/100pen) and hard (bitumen penetration grade 40/60 or 40/60pen). Penetration grade is as defined in ASTM D5 (2006). The blending was performed as follows: hard bitumen blending at hand by 160°C and for soft bitumen mechanically at 160°C, 225 rpm (revolutions per minute), for 30 minutes. Dynamic Shear Rheometer (DSR) master curves were obtained.

The Dynamic Share Rheometer (DSR) test was conducted in accordance with EN 14770:2012. The DSR approach was employed to investigate bitumen stiffness change at range of temperatures between -10°C and 60°C at 10°C increments. The first test was conducted at temperature range of between -10°C and 30°C using an 8 mm diameter plate; the second test was carried out at temperature range between 30°C and 60°C using an 25mm diameter plate. All tests were carried out at a frequency rate of 0.1 - 400 rad/sec (0.02 - 64 Hz). The complex shear modulus and phase angle were recorded. Three bitumen blends for each bitumen, containing 0%, 10% and 20% PHBV were prepared and tested. A sample made up of 100% PHBV was also tested.

Fourier Transformed Infrared Spectroscopy (FTIR) was used to study the prevalence of chemical functional groups and possible differences between the pure and blended bitumen samples. FTIR is generally used to identify bitumen ageing behaviour and polymer content of bitumen. Infrared radiation is used. As the bonds in different functional groups absorb infrared radiation with a specific wavelength to a different extent. The identification of functional groups was achieved by using a Perkin Elmer Universal ATR Sampling Accessory for both the pure bitumen and blended samples, as well as a pure PHBV sample. The spectra were recorded in absorbance within a wavenumber range of 4000 - 600 cm$^{-1}$, a resolution of 4 cm$^{-1}$ and 24 scans. A background spectrum of the empty, clean ATR crystal was recorded prior to each measurement. The binder specimen was applied to the ATR crystal within 1 min after recording the background.

The Gel Permeation Chromatography (GPC) test was carried out in accordance with EN ISO 13885-1:2020 guidelines. A column tightly packed with rigid particles which contain micropores of uniform size was used as the stationary phase. An eluent is used as a mobile phase which flows through the column together with the specimen. The separation of different components with different molecular size arises as the smaller molecules penetrate deeper into the pores, are thus immobilised and spend more time in the column. The retention time is a measure for molecule size and by extension molecular weight, as the two are closely linked. Three columns, APC XT 45, 1.7$\mu$m, APC XT 200, 2.5$\mu$m and APC XT 450, 2.5$\mu$m were used to separate the various components by molecular size. Tetrahydrofuran (THF) was used as both the eluent and as the solvent to create solutions of specific concentration (about 1.2 g/l), which were then filtered with the help of a Milex FH syringe microfilter (with a diameter of 13 mm and a pore size of 0.45$\mu$m to remove any insoluble parts). The test was performed at a constant column temperature of 35°C and at a constant flow rate of the isocratic solvent of 0.5ml/min. To detect components a combination of a Photodiode Array Detector (PDA) over a range from 190 to 450 nm and a Refractive Index Detector (RI) was used. To determine the molecular weight, the UV-detector (PDA) was used at a wavelength of 254 nm.

Differential Scanning Calorimetry (DSC) was used as a thermo analytical technique in accordance to EN ISO 11357-1:2016. A DSC 600 from Perkin Elmer was used over a temperature range from -75°C to 140°C. Specimens were first accurately measured and placed in small aluminium cups, which were sealed before placing them in the DSC. The specimens were first given a thermal history by heating them slowly to 80°C, then cooled down to -75°C and at a constant heat flow heated up to 180°C.

*<u>Results</u>*

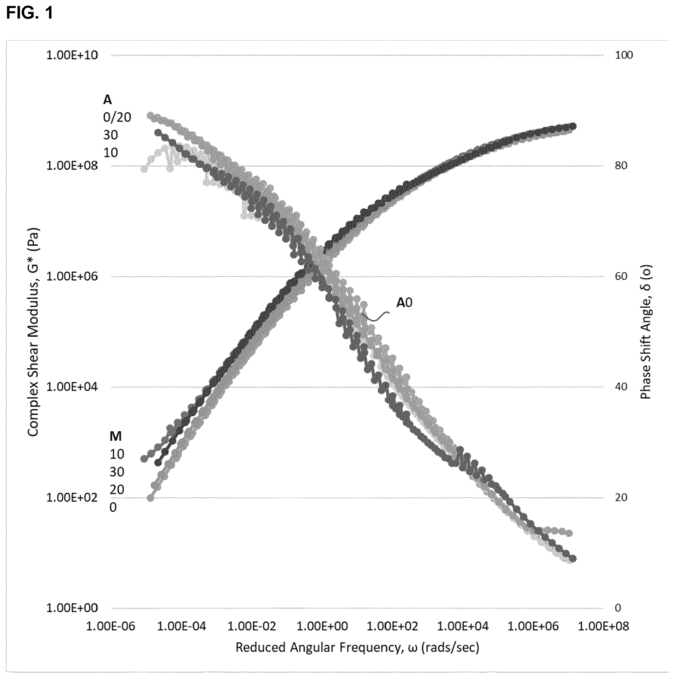

**Fig. 1** shows the DSR master curve (graph) for the soft (70/100) bitumen compositions with 0, and 10 wt.% PHBV included. Curves A indicate the phase angle results for the samples with 0, and 10 wt.% PHBV, curves M indicate the complex shear modules. The sample with 10% PHBV has substantially the same viscoelastic properties as without PHBV fraction; indicating surprisingly that PHBV is suitable as bitumen substitute without significant modifications of the viscoelastic properties.

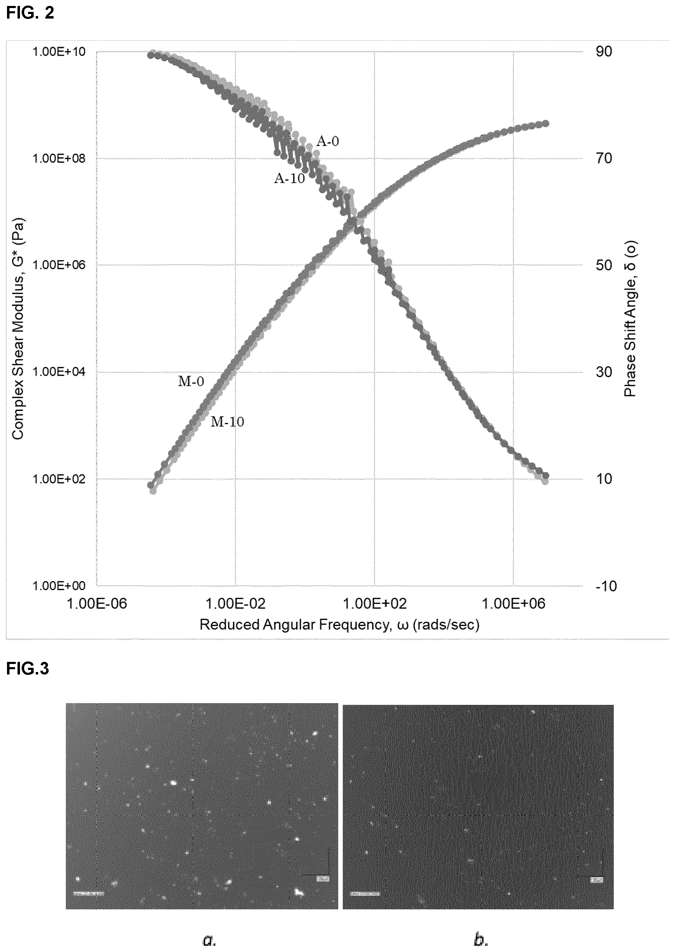

**Fig. 2** shows the DSR master curve (graph) for the hard (40/60) bitumen compositions with respectively 0, 10, 20 and 30 wt.% PHBV included. Curves A indicate the phase angle results for the samples with 0, 10, 20 and 30 % PHBV, curves M indicate the complex shear modules. The sample with up to 30 wt.% PHBV had substantially the same viscoelastic properties as without PHBV fraction; indicating surprisingly that PHBV is suitable as bitumen substitute without significant modifications of these properties.

**Fig. 3** shows microscopic images of 70/100 bitumen samples with a) 0% PHBV and b) 10% PHBV, showing the good mixing after mechanical blending at 160°C and 225 rpm for 30 minutes.

**Table 1** shows the results for GPC (gel permeation chromatography) measurements for the 40/60 samples with different amounts of PHBV as bitumen substituent, and **Table 2** shows the same for the 70/100 samples with different amounts of PHBV substituent. Mn, Mw and Mz are in Dalton.

It can be seen that adding PHBV did not substantially change the molecular weight and distribution thereof. However, 40/60pen + 0%-30%PHBV showed gradual increase in average molecular weight (Mz) indicating a concentration of large molecules in the blends.

The blends 70/100pen + 0% or 10% PHBV showed initial increase of the average molecular weight between the neat bitumen and blend containing 10% PHBV.

Table 1 Mass distribution of the 40/60 bitumen with PHBV

|  | Mn | Mw | Mz | PDI |
|---|---|---|---|---|
| V40/60 + 0% PHBV | 681 | 1583 | 3869 | 2.32 |
| V40/60 + 10% PHBV | 682 | 1581 | 3813 | 2.32 |
| V40/60 + 20% PHBV | 684 | 1591 | 3842 | 2.33 |
| V40/60 + 30% PHBV | 691 | 1645 | 4120 | 2.38 |

Table 2 Mass distribution of the 70/100 bitumen with PHBV

|  | Mn | Mw | Mz | PDI |
|---|---|---|---|---|
| V70/100 + 0% PHBV | 676 | 1785 | 4943 | 2.64 |
| V70/100 + 10% PHBV | 693 | 1896 | 5461 | 2.73 |

Moreover, additional FTIR results indicated that all blends were of comparable chemical composition, with a peak at 1680 cm$^{-1}$ becoming visible in the sample with 30% PHBV indicating the presence of ketone groups; this peak is also present in a pure PHBV sample with higher intensity.

Additional DSC data for 40/60pen bitumen blends with and without PHBV. The results show that PHBV addition to the bitumen blend have very little effect on the heat capacity and glass temperature (Tg) value. The Tg values for all 3 blends are in region between 20°C and 22°C.

Additional DSC test data for 70/100pen bitumen blends with and without PHBV, show, similarly as for the 40/60pen bitumen blends, that PHBV has very little effect on the glass temperature (Tg) values of the blends. The Tg values for 70/100 pen blends range between 22.4°C - 23.5°C.

**Claims**

1. Use of a copolymer comprising 3-hydroxybutyrate monomer and 3-hydroxyvalerate monomer (PHBV) as a substitute for bitumen.

2. Use according to claim 1, wherein the copolymer comprises at least 90 wt.% of -hydroxybutyrate monomer and 3-hydroxyvalerate monomer in total, relative to the total weight of the copolymer.

3. Use according to claim 1 and 2, for replacing bitumen by 10 to 30 wt.% PHBV based on PHBV and bitumen in total.

4. Use according to any of the preceding claims, in paving or roofing.

5. A composition comprising bitumen and a copolymer comprising 3-hydroxybutyrate monomer and 3-hydroxyvalerate monomer (PHBV) as a partial substituent for the bitumen.

6. The composition of claim 5, comprising at least 10 wt.% poly-3-hydroxybutyrate-co-3-hydroxyvalerate (PHBV) based on total weight of the bitumen and PHBV.

7.  The composition of claims 5 or 6, wherein the PHBV copolymer comprises at least 90 wt.% of -hydroxybutyrate monomer and 3-hydroxyvalerate monomer in total, relative to the total weight of the copolymer.

8.  A composition according to any of claims 5-7, in particular an asphalt concrete composition, the composition further comprising mineral aggregate, wherein the mineral aggregate preferably comprises one or more components selected from the group consisting of sand, gravel, crushed stone, slag, and recycle concrete.

9.  Roofing comprising a composition according to any of claims 5-8.

10. Paving comprising a composition according to any of claims 5-8.

11. A method of preparing a pre-determined amount of a composition according to any of claims 5-8, the method comprising:

    - determining the amount of bitumen composition to be produced on the basis of 100 wt.% bitumen, and
    - providing the bitumen fraction in an amount of 90 wt.% or less of said determined amount of bitumen composition and including at least 10 wt.% of copolymer comprising 3-hydroxybutyrate monomer and 3-hydroxyvalerate monomer (PHBV) in said bitumen composition, e.g. up to 50 wt.% PHBV.

12. The method of claim 11, wherein the PHBV fraction is included by blending the mixture with bitumen at a temperature of 140°C - 160°C and preferably at high shear.

**FIG. 1**

**FIG. 2**

**FIG.3**

*a.*                                                    *b.*

Europäisches
Patentamt

European
Patent Office

Office européen
des brevets

# EUROPEAN SEARCH REPORT

Application Number

**EP 23 18 6394**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PENKI RAMU ET AL: "Next-generation bitumen: a review on challenges and recent developments in bio-bitumen preparation and usage", BIOMASS CONVERSION AND BIOREFINERY, vol. 13, no. 11, 6 August 2021 (2021-08-06), pages 9583-9600, XP93110557, Berlin/Heidelberg ISSN: 2190-6815, DOI: 10.1007/s13399-021-01803-4 Retrieved from the Internet: URL:https://link.springer.com/content/pdf/ 10.1007/s13399-021-01803-4.pdf> | 1-12 | INV. C08L95/00 |
| A | CN 115 029 079 A (JIANGSU RUIJIAN TECH CO LTD) 9 September 2022 (2022-09-09) | 1-12 | |
| A | CN 101 476 165 A (UNIV DONGHUA [CN]) 8 July 2009 (2009-07-08) | 1-12 | |
| L | TABAKOVIC AMIR ET AL: "Bio-polymer modified bitumen", CONSTRUCTION AND BUILDING MATERIALS, ELSEVIER, NETHERLANDS, vol. 406, 19 September 2023 (2023-09-19), XP087408915, ISSN: 0950-0618, DOI: 10.1016/J.CONBUILDMAT.2023.133321 [retrieved on 2023-09-19] | 1-12 | TECHNICAL FIELDS SEARCHED (IPC) C08L |

The present search report has been drawn up for all claims

| Place of search | Date of completion of the search | Examiner |
|---|---|---|
| Munich | 8 January 2024 | Rouault, Yannick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 6394

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2024

| Patent document cited in search report | Publication date | Patent family member(s) | Publication date |
|---|---|---|---|
| CN 115029079 A | 09-09-2022 | NONE | |
| CN 101476165 A | 08-07-2009 | NONE | |

EPO FORM P0459

For more details about this annex : see Official Journal of the European Patent Office, No. 12/82

**EP 4 495 188 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20170096558 A1

- EP 2956493 A

**Non-patent literature cited in the description**

- **ELHAMI et al.** Extraction of low molecular weight polyhydroxyalkanoates from mixed microbial cultures using bio-based solvents. *Separation and Purification Technology*, 2022, vol. 299, 121773

- **WERKER et al.** Consistent production of high quality PHA using activated sludge harvested from full scale municipal wastewater treatment - PHARIO. *Water Sci Technol*, 28 December 2018, vol. 78 (11), 2256-2269